# EUROPEAN PATENT SPECIFICATION

(11) **EP 1 278 322 B1**
(45) Date of publication and mention of the grant of the patent: **06.10.2004**
(21) Application number: 01402150.5
(22) Date of filing: 10.08.2001
(51) Int. Cl.: H04J 11/00

(54) **Method for displaying spreading codes which have been allocated to transmission system of the code division multiple access (CDMA) type with a view to diagnosis of this allocation**
Verfahren zur Darstellung von Spreizkodes, die einem CDMA-artigen Übertragungssystem zugewiesen wurden, mit dem Ziel der Diagnose dieser Zuweisung
Procédé de présentation de codes d'étalement alloués à un système de transmission de type CDMA en vue de diagnostiquer cette allocation

(30) Priority: 19.07.2001 FR 0109961
(43) Date of publication of application: 22.01.2003
(73) Proprietor: Mitsubishi Electric Information Technology Centre Europe B.V., 1119 NS Schiphol Rijk (NL)
(72) Inventor: Joalland, Pierre-Hugues, 35510 CESSON-SEVIGNE (FR)
(74) Representative: Maillet, Alain

(56) References cited:
- WO-A-01/28104
- JP-A- 2000 216 754
- IGLESIAS-XAMANI M: "CODE DOMAIN ANALYSIS ON W-CDMA USER EQUIPMENT TRANSMITTERS" MICROWAVE JOURNAL, HORIZON HOUSE. DEDHAM, US, vol. 44, no. 1, January 2001 (2001-01), pages 82,85,87-88,90,92,94, XP001001168 ISSN: 0192-6225

## Description

The present invention concerns a method for displaying spreading codes which have been allocated to transmission channels in a transmission system of the code division multiple access (CDMA) type with a view to diagnosis of this allocation.

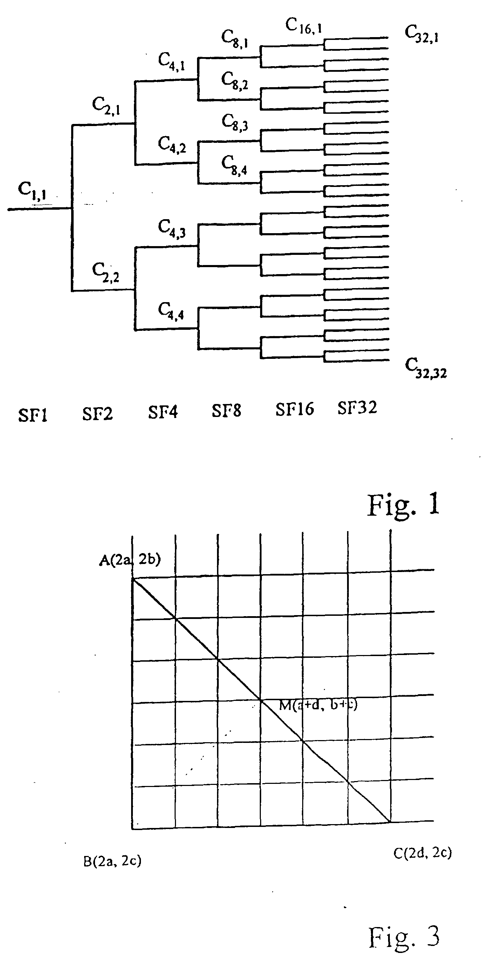

In a telecommunication system for mobiles with code division multiple access, also referred to as a CDMA (Code Division Multiple Access) system, codes, known as spreading codes, are used for differentiating the users from each other. It is known that use can be made of codes with a variable spreading factor, which have the particularity on the one hand of being orthogonal even if they have different lengths and on the other hand having a variable spreading length. These codes with a variable spreading factor are determined from code trees such as the one depicted in Fig. 1.

Each level of the tree is represented by a spreading factor denoted SF. In the tree in Fig. 1, there are six levels and therefore six spreading factors denoted respectively SF1, SF2, SF4, ..., SF32. This tree can for example also be defined with 8 spreading factors with spreading factors ranging from SF4 to SF512. Each code C_{i,j} is doubly indexed. One index, *i*, corresponds to the spreading level or factor, whilst the other one, *j*, corresponds to an order in the latter level (in Fig. 1, the order from top to bottom).

The base stations of a CDMA telecommunication system are responsible for allocating a spreading code to each channel. In order to preserve orthogonality between the codes used, a code of a given level can be allocated only if no other code in the same branch, upstream or downstream, has already been allocated. Thus, in Fig. 1, the code C_{4,1} cannot be allocated if one of the codes C_{2,1} or C_{8,2} has already been allocated. On the other hand, the code C_{4,2}, which does not belong to the same branch, still in this case, can be allocated. Codes with a low spreading factor give many non-allocatable codes whilst codes with a high spreading factor give few non-allocatable codes.

Spreading codes with a variable spreading factor are used according to the orthogonal codes still available and the transmission rates which they allow. In the code tree depicted in Fig. 1, the higher the level of a code (the higher the spreading factor), and therefore the longer it is, the more the channel corresponds to a low potential transmission rate. Codes with a high spreading factor allow low transmission rates whilst codes with a low spreading factor allow high transmission rates.

It is necessary to be able to establish that the allocation of the spreading codes is effected correctly and that the protocols used thus function correctly. Use is made to do this of diagnosis equipment which, at all times, establish and display spreading code maps which are allocated.

Such equipment is for example described in the patent document JP-A-2000216754, where it can be seen that the maps are generally in the form of rectangles whose height is proportional to the transmission power on the channel corresponding to a given code and the width to the corresponding transmission rate. When a code is not allocated, the transmission power of the corresponding channel is zero, so that the height of the corresponding rectangle is also zero. Thus, using this equipment, it is possible to diagnose the allocation of the spreading codes.

Another relevant system is disclosed in the publication 'CODE DOMAIN ANALYSIS ON W-CDMA USER EQUIPMENT TRANSMITTERS' by IGLESIAS-XAMANI M, MICROWAVE JOURNAL, HORIZON HOUSE. DEDHAM, US, vol. 44, no. 1, January 2001, pages 82,85,87-88,90,92,94, XP001001168, ISSN: 0192-6225.

However, such a display is not explicit since it results from the combination of two characteristics which are, in CDMA telecommunication systems, interdependent.

The problem which the invention seeks to resolve is that of finding a method for displaying the spreading codes in an explicit way. To do this, it is therefore desirable to establish a map of the allocated (or allocatable) spreading codes, which takes account only of the single allocation criterion consisting of the transmission rate. It is also desirable for the potential transmission rate of a channel to be displayed by a surface whose area is proportional to this rate. Likewise, it is wished to represent all the codes allocated or allocatable by figures which are geometrically similar whatever their spreading factor.

In addition, it is sought to display only the codes which are allocated or those which are possibly allocatable. In particular, it is not wished to display the codes which could not be allocated since they are on a branch of a code already used.

The problem which the present invention seeks to resolve is again that of simplifying the calculations which will lead to this particular display, the object of the present invention.

To this end, a method for displaying the spreading codes which have been allocated to transmission channels consists of:
a) allocating a right-angled isosceles triangle or a square to the spreading code with the lowest spreading factor and displaying the said triangle or square,
b) if the said spreading code with the lowest spreading factor has been allocated, making the said triangle or the said square definitive, or otherwise dividing it into two right-angled isosceles triangles by drawing the mid-perpendicular to the vertex of the right angle of the said triangle or by drawing a diagonal of the said square,
c) allocating to each of the spreading codes with a spreading factor immediately above the previous spreading factor which are able to be allocated a right-angled isosceles triangle amongst all those which have been obtained previously by division and, for each of the said spreading codes, establishing whether it has been allocated and, in this case, making the said corresponding triangle definitive, or otherwise dividing the said corresponding triangle into two right-angled isosceles triangles by drawing the mid-perpendicular to the vertex of the right-angle,
d) recommencing step c) until there is no longer any division or when the said spreading codes have the highest spreading factor managed by the said communication system.

Advantageously, in order to display not only the codes allocated but also the codes which can be allocated, the method according to the invention consists, when there is no longer any division or when the said spreading codes have the highest spreading factor managed by the said communication system, of grouping together the triangles of the unallocated spreading codes which are adjacent, starting from the spreading factors with the highest level as far as the spreading factors with the lowest possible level.

According to another characteristic of the present invention, the allocation of a right-angled isosceles triangle to each of the spreading codes is effected so that, at the same spreading factor level, two adjacent codes correspond to two adjacent right-angled isosceles triangles.

Advantageously, the said method consists of allocating to the spreading codes colours which are warmer, the higher the transmission rate which they enable.

The present invention also concerns an item of equipment for diagnosing the allocation of spreading codes to transmission channels in a transmission system of the code division multiple access (CDMA) type, said equipment being designed to synthetically display this allocation using, according to the invention, the display method described above.

The characteristics of the invention mentioned above, as well as others, will emerge more clearly from a reading of the following description given in relation to the accompanying drawings, amongst which:
Fig. 1 is a view showing the hierarchy of the spreading codes in a transmission system of the CDMA type in several spreading factor levels,
Fig. 2 is a view illustrating the general principle governing the display method of the present invention,
Fig. 3 is a view illustrating the division of a right-angled isosceles triangle into two right-angled isosceles triangles by drawing the mid-perpendicular to the vertex of the right-angle,
Figs. 4a and 4b illustrate the implementation of the method of the present invention in the case of an example of allocation of spreading codes,
Figs. 5a and 5b illustrate the implementation of the method of the present invention in the case of an example of allocation of spreading codes, not all the codes being allocated and the method allowing the display of the allocatable codes, and
Fig. 6 illustrates the relative position of the triangles with respect to each other.

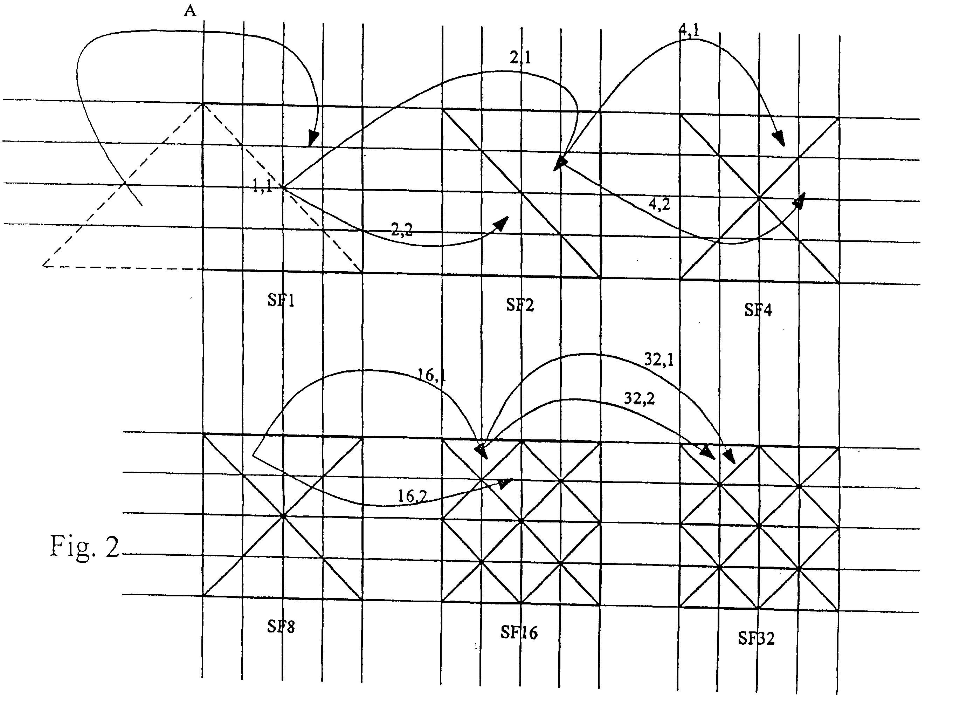

According to the principle of the present invention, each spreading code is represented by a right-angled isosceles triangle which firstly results from the division of a right-angled isosceles triangle representing the spreading code with the immediately lower level into two identical right-angled isosceles triangles and which secondly is divided into two right-angled isosceles triangles of the same size for the spreading codes of the immediately higher level. In Fig. 2, it can thus be seen that the right-angled isosceles triangle representing the spreading code C_{4,1} is the result of the division into two of the isosceles triangle representing the spreading code C_{2,1}, the other triangle resulting from this division representing the spreading code C_{4,2}. Likewise, it can be seen that the right-angled isosceles triangle representing the spreading code C_{4,3} is the result of the division into two of the isosceles triangle representing the spreading code C_{2,2}, the other triangle resulting from this division representing the spreading code C_{4,4}.

Still likewise, it can be seen that the right-angled isosceles triangle representing the spreading code C_{16,1} is the result of the division into two of the isosceles triangle representing the spreading code C_{8,1}, the other triangle resulting from this division representing the spreading code C_{8,2}. Likewise again, the right-angled isosceles triangle representing the spreading code C_{32,1} is the result of the division into two of the isosceles triangle representing the spreading code C_{16,1}, the other triangle resulting from this division representing the spreading code C_{16,2}.

With regard to the spreading factor SF1, the original right-angled isosceles triangle is depicted in dotted lines. This triangle is folded onto itself, as is shown by the arrow A in Fig. 2, so as to obtain, as the starting figure, not a triangle but a square.

It should be noted that the spreading factor SF1 is little used since it at most allows only one user.

The advantage of the invention lies in the fact that all the figures which represent a spreading code are identical with regard to their shape. Their surface areas are on the other hand one half of that of the triangle from which they result and double those which they form by division.

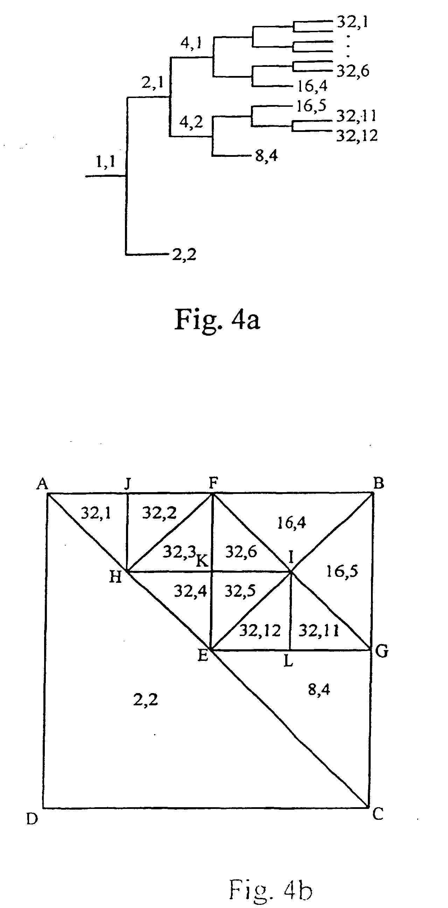

However, the essential advantage lies in the fact that, if the vertex of the right-angle of a right-angled isosceles triangle has integer coordinates and if these other two vertexes have integer and even coordinates, then the foot of the mid-perpendicular by means of which this triangle will be divided into two will have integer coordinates. In Fig. 3, a right-angled isosceles triangle ABC can be seen, on which the points A, B and C have respectively the following coordinates: (2a, 2b); (2a, 2c); (2d, 2c) where a, b and c are integers. These coordinates are therefore even. The point M, the foot of the mid-perpendicular MB and therefore the middle of the segment AC, has the coordinates (a+d, b+c). The sum of the two integer numbers also being an integer number, the result is that the coordinates of the point M are integer. An important technical advantage results from these characteristics since the calculations which are then made for the division are simple to effect and therefore consume few machine resources.

In order to fulfil the above condition, it suffices for the right-angled isosceles triangles representing the longest codes (and therefore the highest spreading factor level) which the system can support have integer coordinates. The other triangles for which the result will then necessarily have integer coordinates.

In order to draw the graph corresponding to a state of allocation of the spreading codes, the following procedure is followed. In general terms, for each spreading factor level SFi, it is examined whether or not each of the spreading codes C_{i,j} of this level has been allocated. If it has not been allocated, the right-angled isosceles triangle of this level is divided by drawing the mid-perpendicular of the right-angle of this triangle. On the other hand, if a spreading code C_{i,j} has been allocated, the corresponding right-angled isosceles triangle is reserved, which can no longer be modified subsequently. Once all the spreading codes of this level have been examined, the following level is considered, and so on.

Such a mechanism will be described in relation to Figs. 4a and 4b, which illustrate respectively an example of code allocation and the corresponding graph. At the first level corresponding to the spreading factor SF₁, it does not have any code allocated. Therefore the original square ABCD is divided (see above in this regard, and Fig. 2) into two identical right-angled isosceles triangles ABC and ACD by drawing the diagonal AC and now the level corresponding to the spreading factor SF₂ is considered. There, the spreading code C_{2,1} has not been allocated. Consequently, the corresponding triangle ABC is divided into two identical triangles ABE and BCE by drawing the mid-perpendicular BE. As for the spreading code C_{2,2}, this has been allocated, therefore the corresponding right-angled isosceles triangle ACD is reserved.

The spreading factor level SF₄ is now considered. There, no spreading code has been allocated. Therefore, by drawing the mid-perpendiculars EF and EG, each of the two right-angled isosceles triangles ABE and BCE is divided and the spreading factor level SF₈ is considered.

At this level SF₈, only the code C_{8,4} has been allocated. Consequently only the corresponding triangle ECG is reserved. The other triangles AEF, EBF and BEG are divided into two by the respective lines of the mid-perpendiculars FH, FI and GI. The spreading factor level SF₁₆ is now considered.

At this level SF₁₆, only the codes C_{16,4} and C_{16,5} have been allocated. Consequently, only the corresponding triangles FBI and BGI are reserved. The other triangles AFH, FEH, FEI, EGI are divided into two by the respective lines of the mid-perpendiculars HJ, HK, KI and IL. The spreading factor level SF₃₂ is now considered, where similar processes take place and therefore do not need to be described in any more detail for a good understanding of the invention.

It is possible that, when arriving at the spreading factor of the highest level, no code is allocated. Consequently the codes which are then represented at this level are codes which are allocatable. This is for example the case in Fig. 5a, with regard to the spreading codes with the spreading factor C_{32,1} to C_{32,4}. In this Fig. 5a, the allocated codes are marked with a dot, which is not the case with the unallocated codes. According to the invention, the spreading codes of the lowest level, which can also be allocatable, will then be sought and displayed. To do this, the triangles of the unallocated spreading codes which are adjacent are grouped together starting from the spreading factors of the highest level to the spreading factors of the lowest possible level, and this so as to display not only the allocated codes but also the allocatable codes.

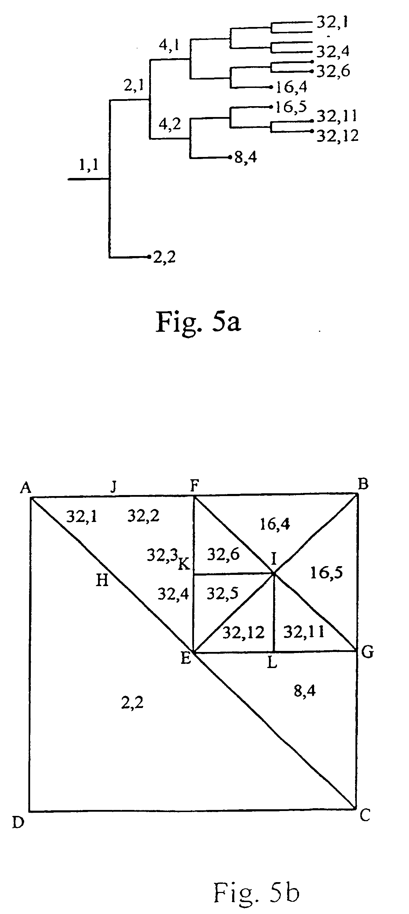

For example, in Fig. 5a, the grouping together of the codes C_{32,1} and C_{32,2} is carried out and the spreading code from which these two codes come, that is to say the code C_{16,1}, will then be considered. The same procedure is followed for the codes C_{32,3} and C_{32,4}, from which the code C_{16,2} will be considered. The codes C_{16,1} and C_{16,2} are also grouped together and the code C_{8,1} from which they come will be considered. However, because the codes of levels higher than the code C_{8,2}, adjacent to the code C_{8,1}, are allocated, the groupings are stopped there. Fig. 5b shows the graph then obtained.

The correspondence between spreading code C_{i,j} and the position of the corresponding triangle is made so that two adjacent rectangular isosceles triangles correspond to two codes of the same spreading factor level SFᵢ and respective indices j and j+1.

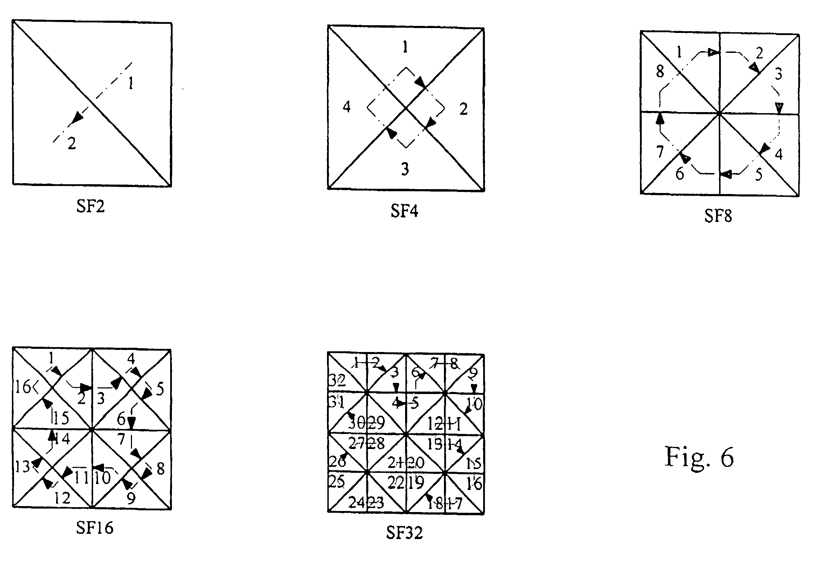

A spreading code C_{i,j} of a spreading factor level SFᵢ and serial number j gives rise to two spreading codes C_{2i, 2j-1} and C_{2i, 2j} of the same spreading factor level SF₂ᵢ and respective serial numbers 2j-1 and 2j. The triangles corresponding to these two codes C_{2i, 2j-1} and C_{2i,2j} are placed with respect to each other so as always to pass from the first to the second in the same direction, clockwise, as is the case in Fig. 6, or anticlockwise.

Fig. 5 shows the graphs corresponding to five spreading factor levels SF₁ to SF₃₂, each triangle in a graph bearing the serial number j of the corresponding spreading code. It can be seen that, at level SF_{2,} the passage from triangle 1 to triangle 2 takes place in the clockwise direction. The triangle 1 of level SF₂ is divided at the level SF₄ into two triangles 1 and 2, whilst the triangle 2 of the level SF₂ is divided at the level SF₄ into two triangles 3 and 4, in accordance with what was stated above. It can be seen that the passage from the triangle 1 to the triangle 2 and the passage from the triangle 3 to the triangle 4 also takes place in the clockwise direction.

The spreading factor levels SF₄, SF₈ and SF₁₆ will be understood in the same way. Finally, the triangle 1 of level SF₁₆ is divided at level SF₃₂ into two triangles 1 and 2, the triangle 2 of level SF₁₆ is divided at level SF₃₂ into two triangles 3 and 4, the triangle 3 of level SF₁₆ is divided at level SF₃₂ into two triangles 5 and 6, the triangle 4 into two triangles 7 and 8, etc. It can also be seen that the passage from triangle 1 to triangle 2, the passage from triangle 3 to triangle 4, the passage from triangle 5 to triangle 6 and the passage from triangle 7 to triangle 8 also take place in the clockwise direction.

It will also have been remarked that, at each spreading factor level SFᵢ, the right-angled isosceles triangle corresponding to the code C_{i,1} of order 1 is placed to the right of the top left-hand corner of the original square.

In order to better display the allocated spreading codes and the allocatable spreading codes, there are allocated to the codes colours which are warmer, the higher the transmission rate which they enable. For example, for the spreading codes of the spreading factor SF4, the colour red is allocated, for the spreading codes of spreading factor SF8 the colour yellow etc is allocated, and to the spreading codes of spreading factor SF16, the colour blue.

## Claims

1. Method for displaying spreading codes which have been allocated to transmission channels in a transmission system of the code division multiple access type with a view to diagnosis of this allocation, each spreading code belonging to a hierarchical level in a tree depending on its spreading factor, **characterised in that** it comprises the steps of:
a) allocating a right-angled isosceles triangle or a square to the spreading code with the lowest spreading factor and displaying the said triangle or square,
b) if the said spreading code with the lowest spreading factor has been allocated, making the said triangle or the said square definitive, or otherwise dividing it into two right-angled isosceles triangles by drawing the mid-perpendicular to the vertex of the right angle of the said triangle or by a drawing a diagonal of the said square,
c) allocating to each of the spreading codes with a spreading factor immediately above the previous spreading factor which are able to be allocated a right-angled isosceles triangle amongst all those which have been obtained previously by division and, for each of the said spreading codes, establishing whether it has been allocated and, in this case, making the said corresponding triangle definitive, or otherwise dividing the said corresponding triangle into two right-angled isosceles triangles by drawing the mid-perpendicular to the vertex of the right-angle,
d) recommencing step c) until there is no longer any division or when the said spreading codes have the highest spreading factor managed by the said communication system.

2. Method for displaying spreading codes according to Claim 1, **characterised in that** it consists in, when there is no longer any division or when the spreading codes have the highest spreading factor managed by the said communication system, grouping together the triangles of the unallocated spreading codes which are adjacent, starting from the spreading factors of the highest level as far as the spreading factors of the lowest possible level, and this so as to display not only the allocated codes but also the allocatable codes.

3. Method for displaying spreading codes according to Claim 1 or 2, **characterised in that** the allocation of a right-angled isosceles triangle to each of the spreading codes is effected so that, at one and the same spreading factor level, two adjacent codes correspond to adjacent right-angled isosceles triangles.

4. Method for displaying spreading codes according to one of the preceding claims, **characterised in that** it consists of allocating to the spreading codes colours which are warmer, the higher the transmission rate which they enable.

5. Equipment for diagnosing the allocation of spreading codes to transmission channels in a transmission system of the code division multiple access type, the said equipment being designed to display this allocation synthetically, **characterised in that** it comprises means for carrying out each of the steps of the display method according to one of Claims 1 to 4.

## Patentansprüche

1. Verfahren zum Anzeigen von Spreizcodes, die Übertragungskanälen in einem Übertragungssystem vom Codemultiplex-Vielfachzugriffstyp zugeteilt worden sind, hinsichtlich einer Diagnose dieser Zuteilung, wobei jeder Spreizcode in Abhängigkeit von seinem Spreizfaktor zu einer hierarchischen Ebene in einem Baum gehört, **dadurch gekennzeichnet, dass** es die folgenden Schritte aufweist:
a) Zuteilen eines rechtwinkligen gleichschenkligen Dreiecks oder eines Quadrats bzw. Rechtecks zu dem Spreizcode mit dem niedrigsten Spreizfaktor und Anzeigen des Dreiecks oder Quadrats,
b) wenn der Spreizcode mit dem niedrigsten Spreizfaktor zugeteilt worden ist, Markieren des Dreiecks oder des Quadrats definitiv oder sonst Aufteilen von ihm in zwei rechtwinklige gleichschenklige Dreiecke durch Ziehen der Mittelsenkrechten zum Scheitelpunkt des rechten Winkels des Dreiecks oder durch Ziehen einer Diagonalen durch das Quadrat,
c) Zuteilen eines Spreizfaktors direkt oberhalb des vorherigen Spreizfaktors zu jedem der Spreizcodes, welche unter all denjenigen einem rechtwinkligen gleichschenkligen Dreieck zugeteilt werden können, die zuvor durch Aufteilung erhalten worden sind, und für jeden der Spreizcodes Festsetzen, ob er zugeteilt worden ist, und in diesem Fall Markieren des entsprechenden Dreiecks definitiv oder sonst Aufteilen des entsprechenden Dreiecks in zwei rechtwinklige gleichschenklige Dreiecke durch Ziehen der Mittelsenkrechten zum Scheitelpunkt des rechten Winkels,
d) erneutes Beginnen mit dem Schritt c), bis es keine weitere Aufteilung gibt oder bis dahin, wenn die Spreizcodes den höchsten Spreizfaktor haben, der durch das Kommunikationssystem gemanagt wird.

2. Verfahren zum Anzeigen von Spreizcodes nach Anspruch 1, **dadurch gekennzeichnet, dass** es dann, wenn es keine weitere Aufteilung gibt oder wenn die Spreizcodes den höchsten Spreizfaktor haben, der durch das Kommunikationssystem gemanagt wird, besteht aus einem Gruppieren der Dreiecke der nicht zugeteilten Spreizcodes miteinander, die benachbart sind, einem Starten ab den Spreizfaktoren der höchsten Ebene ebenso wie den Spreizfaktoren der niedrigsten möglichen Ebene, und dieses, um nicht nur die zugeteilten Codes anzuzeigen, sondern auch die zuteilbaren Codes.

3. Verfahren zum Anzeigen von Spreizcodes nach Anspruch 1 oder 2, **dadurch gekennzeichnet, dass** die Zuteilung eines rechtwinkligen gleichschenkligen Dreiecks zu jedem der Spreizcodes so bewirkt wird, dass auf ein und derselben Spreizfaktor-Ebene zwei benachbarte Codes benachbarten rechtwinkligen gleichschenkligen Dreiecken entsprechen.

4. Verfahren zum Anzeigen von Spreizcodes nach einem der vorangehenden Ansprüche, **dadurch gekennzeichnet, dass** es aus einem Zuteilen von Farben zu den Spreizcodes besteht, die wärmer sind, um so höher die Übertragungsrate ist, welche sie ermöglichen.

5. Gerät zum Diagnostizieren der Zuteilung von Spreizcodes zu Übertragungskanälen in einem Übertragungssystem vom Codemultiplex-Vielfachzugriffstyp, wobei das Gerät entwickelt ist, um diese Zuteilung synthetisch anzuzeigen, **dadurch gekennzeichnet, dass** es eine Einrichtung zum Ausführen von jedem der Schritte des Verfahrens zum Anzeigen nach einem der Ansprüche 1 bis 4 aufweist.

## Revendications

1. Procédé pour visualiser des codes d'étalement qui ont été attribués à des canaux de transmission d'un système de transmission du type à accès multiple par division de codes en vue d'un diagnostic de cette attribution, chaque code d'étalement appartenant à un niveau hiérarchique d'un arbre dépendant de son facteur d'étalement, **caractérisé en ce qu'**il consiste à
a) affecter au code d'étalement de plus bas facteur d'étalement un triangle isocèle rectangle ou un carré et afficher ledit triangle ou carré,
b) si ledit code d'étalement de plus bas facteur d'étalement a été attribué, rendre ledit triangle ou ledit carré définitif, sinon le diviser en deux triangles isocèles rectangles par tracé de la médiatrice au sommet de l'angle droit dudit triangle ou par tracé d'une diagonale dudit carré,
c) affecter à chacun des codes d'étalement de facteur d'étalement immédiatement supérieur au facteur d'étalement précédent qui sont susceptibles d'être attribués un triangle isocèle rectangle parmi tous ceux qui ont été obtenus précédemment par division et, pour chacun desdits codes d'étalement, établir s'il a été attribué et, dans ce cas, rendre ledit triangle correspondant définitif, sinon diviser ledit triangle correspondant en deux triangles isocèles rectangles par tracé de la médiatrice au sommet de l'angle droit,
d) recommencer l'étape c) jusqu'à ce qu'il n'y ait plus de division ou lorsque lesdits codes d'étalement aient le plus haut facteur d'étalement géré par ledit système de communication.

2. Procédé pour visualiser des codes d'étalement selon la revendication 1, **caractérisé en ce qu'**il consiste, lorsqu'il n'y a plus de division ou lorsque lesdits codes d'étalement ont le plus haut facteur d'étalement géré par ledit système de communication, à en regrouper les triangles des codes d'étalement non-attribués qui sont adjacents en partant des facteurs d'étalement de plus haut niveau jusqu'aux facteurs d'étalement de niveau le plus bas possible et, ce, de manière à visualiser non seulement les codes attribués mais aussi les codes attribuables.

3. Procédé pour visualiser des codes d'étalement selon la revendication 1 ou 2, **caractérisé en ce que** l'affectation d'un triangle isocèle rectangle à chacun des codes d'étalement est réalisée de manière qu'à un même niveau de facteur d'étalement, deux codes voisins correspondent deux triangles rectangles isocèles adjacents.

4. Procédé pour visualiser des codes d'étalement selon une des revendications précédentes, **caractérisé en ce qu'**il consiste à affecter aux codes d'étalement des couleurs d'autant plus chaudes que le débit qu'ils autorisent est élevé.

5. Appareil pour diagnostiquer l'attribution de codes d'étalement à des canaux de transmission d'un système de transmission du type à accès multiple par division de codes, ledit appareil étant prévu pour visualiser de manière synthétique cette attribution, **caractérisé en ce qu'**il comprend des moyens de mise en oeuvre à chacune des étapes du procédé de visualisation selon une des revendications 1 à 4.
